(19) Europäisches Patentamt / European Patent Office / Office européen des brevets

(11) **EP 2 141 946 A1**

(12) **EUROPEAN PATENT APPLICATION**

(43) Date of publication:
06.01.2010 Bulletin 2010/01

(51) Int Cl.:
*H04W 16/10* (2009.01)　　*H04W 72/04* (2009.01)

(21) Application number: 09158380.7

(22) Date of filing: 21.04.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 02.07.2008 JP 2008173841

(71) Applicant: Fujitsu Limited
Kawasaki-shi, Kanagawa 211-8588 (JP)

(72) Inventor: Ode, Takayoshi
Kawasaki-shi, Kanagawa 211-8588 (JP)

(74) Representative: Stebbing, Timothy Charles
Haseltine Lake LLP
Lincoln House, 5th Floor
300 High Holborn
London WC1V 7JH (GB)

(54) **Base station device, frequency allocation method, and mobile communication system using the same**

(57)　A base station device (10) performs wireless communication with a terminal device. The base station device includes a setting unit (15) to set a first frequency group in which frequencies that differ from frequencies used in an adjacent base station device are used, a second frequency group including different frequencies to the frequencies included in the first frequency group, and a third frequency group including frequencies that overlap at least partially the frequencies included in the first or second frequency group; an allocating unit (16) to allocate a frequency included in one of the first to third frequency groups to the terminal device; and a transmission unit (19) to transmit the allocated frequency to the terminal device.

FIG.1

**Description**

The present invention relates to a base station device, a frequency allocation method, and a mobile communication system using the device and method.

In the 3GPP (3rd Generation Partnership Project), an LTE (Long Term Evolution or Evolved UTRA and UTRAN) system is currently under investigation as a next-generation wireless communication standard (3GPP TS 36.211 V8.0.0 (2007-09), for example). A prerequisite of the LTE system is its coexistence with a W-CDMA system, and therefore the system bandwidth has been set at 20MHz. Accordingly, a terminal must be formed to be capable of receiving this system bandwidth.

Meanwhile, an LTE-Advanced system has been determined by the 3GPP as a system to be debated in the future. An expansion in the system bandwidth of the LTE-Advanced system (to 100MHz, for example) is under investigation.

However, to be able to receive the expanded band, a terminal requires an amplifier, an antenna, or the like having a uniform gain at a bandwidth of 100MHz or more, for example, and at present, realization of such a terminal is difficult.

Meanwhile, FFR (Fractional Frequency Reuse) exists as a method employed in mobile communication systems to suppress interference from an adjacent base station or another terminal (Mobile WiMax-Part I: A Technical Overview and Performance Evaluation (August 2006) WiMax FORUM, for example).

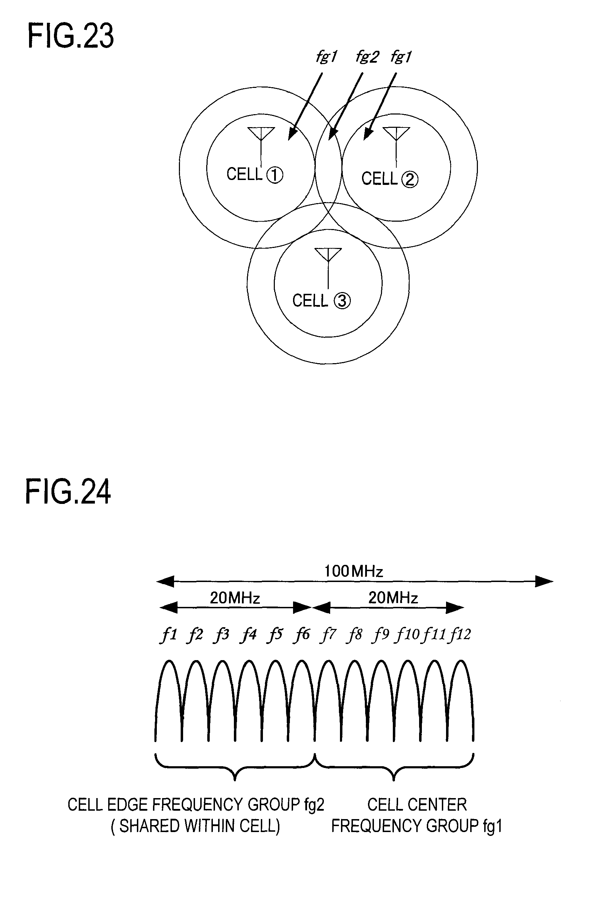

In FFR, for example, a system band is divided into two groups, namely a frequency group fg1 used in a cell center and a frequency group fg2 used on a cell edge, and the frequency group fg2 uses different frequencies such that the usage frequency does not collide with an adjacent cell (see FIGS. 23 and 24).

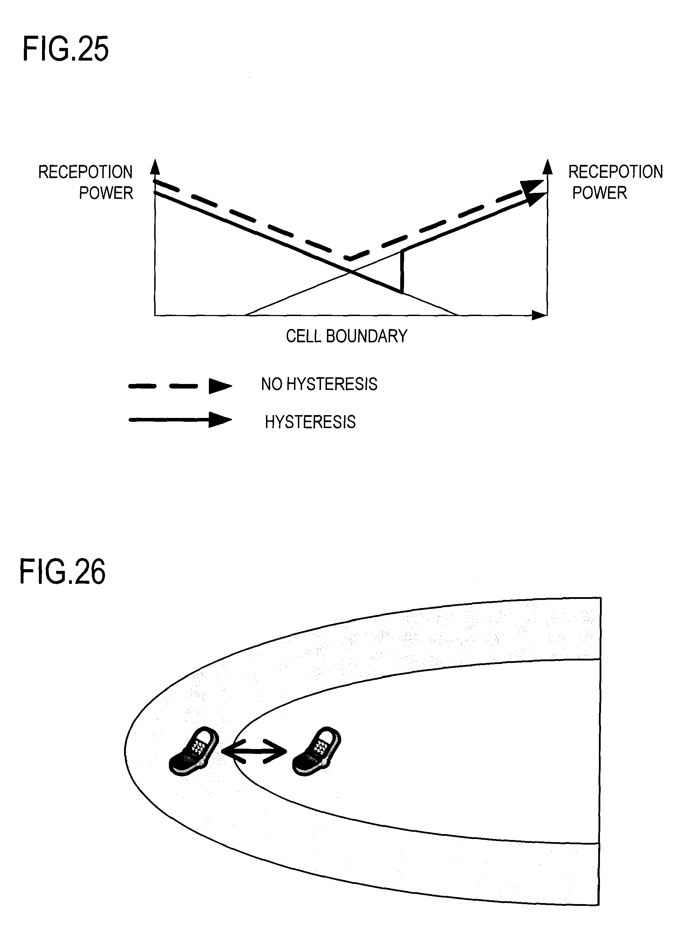

Further, in this mobile communication system, a technique known as hysteresis is employed (3GPP TS 25.331 V5.21.0 (2007-12), for example). In hysteresis, when a terminal moves into a cell range of another base station during a handover, the terminal continues to use the pre-movement frequency for a fixed time period (see FIG. 25).

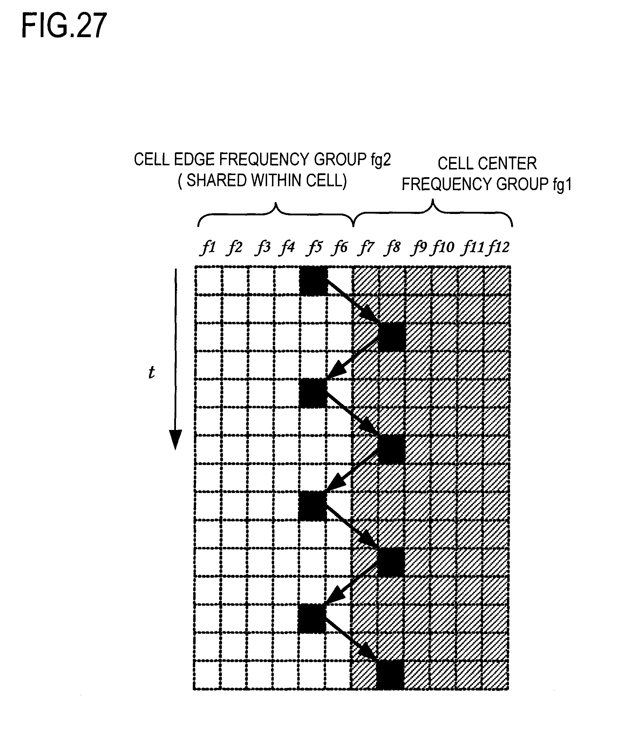

When a transceiving bandwidth of a terminal is narrower than the system bandwidth, for example when communication can be performed using only the frequency group fg2 on the cell edge or the frequency group fg1 in the cell center, and the terminal moves from the cell center to the cell edge (or from the cell edge to the cell center), the transceiving bandwidth varies (see FIGS. 26 and 27). When the terminal switches transceiving band (to be referred to hereafter as "channel switching"), channel switching processing (processing to modify the frequency setting of a local receiver, achieve synchronization with the base station, and so on) must be performed. A reception data amount of the terminal decreases in accordance with the processing time, and as a result, throughput deteriorates. As shown in FIG. 27, when the terminal comes and goes between the cell edge and the cell center, channel switching occurs particularly frequently, and as a result, throughput deteriorates.

Meanwhile, when hysteresis is used to prevent frequent channel switching, the terminal uses a frequency employed in the cell center on the cell edge, for example. The cell center frequency is used on the assumption that interference with an adjacent cell will not occur. Therefore, when the terminal uses this frequency on the cell edge, interference with the adjacent cell occurs, and as a result, the FFR effect deteriorates.

Accordingly, it is desirable to provide a base station device, a frequency allocation method, a mobile communication system, and a communication device with which throughput is improved.

In an aspect of the invention, a base station device that performs wireless communication with a terminal device includes:

a setting unit for setting a first frequency group in which frequencies that differ from frequencies used in an adjacent base station device are used, a second frequency group including different frequencies to the frequencies included in the first frequency group, and a third frequency group including frequencies that overlap at least partially the frequencies included in the first or second frequency group;
an allocating unit for allocating a frequency included in one of the first to third frequency groups to the terminal device; and
a transmission unit for transmitting the allocated frequency to the terminal device.

The present invention provides a base station device, a frequency allocation method, and a mobile communication system, with which throughput is improved.

The advantages of the invention will be realized and attained by means of the elements and combinations particularly pointed out in the claims.

It is to be understood that both the foregoing general description and the following detailed description are exemplary and explanatory and are not restrictive of the invention, as claimed.

Reference is made, by way of example only, to the accompanying drawings in which:

FIG. 1 is a constitutional example of a base station;

FIG. 2 is a constitutional example of a terminal;

FIG. 3 is a flowchart showing an example of processing;

FIG. 4 is a view showing an example of frequency group allocation;

FIG. 5 is a view showing an example of usage frequency switching;

FIG. 6 is a view showing an example of a usage frequency (sub-carrier) configuration;

FIG. 7 is a flowchart showing an example of processing;

FIG. 8 is a view showing another constitutional example of a base station;

FIG. 9 is a view showing an example of transmission power;

FIG. 10 is a view showing an example of transmission power;

FIG. 11 is a view showing an example of transmission power;

FIG. 12 is a view showing an example of transmission power;

FIG. 13 is a view showing an example of transmission power;

FIG. 14 is a flowchart showing an example of processing;

FIG. 15 is a flowchart showing an example of processing;

FIG. 16 is a flowchart showing an example of processing;

FIG. 17 is a flowchart showing an example of processing;

FIG. 18 is a view showing an example of frequency switching;

FIG. 19 is a view showing an example of frequency switching;

FIG. 20 is a view showing an example of frequency switching;

FIG. 21 is a view showing another constitutional example of a base station;

FIG. 22 is a view showing another constitutional example of a terminal;

FIG. 23 is a view showing an example of a cell configuration;

FIG. 24 is a view showing a constitutional example of a frequency band;

FIG. 25 is a view illustrating the content of hysteresis;

FIG. 26 is a view showing the manner in which a terminal moves; and

FIG. 27 is a view showing an example of usage frequency switching.

Embodiments will be described below with reference to the drawings.

(First Embodiment)

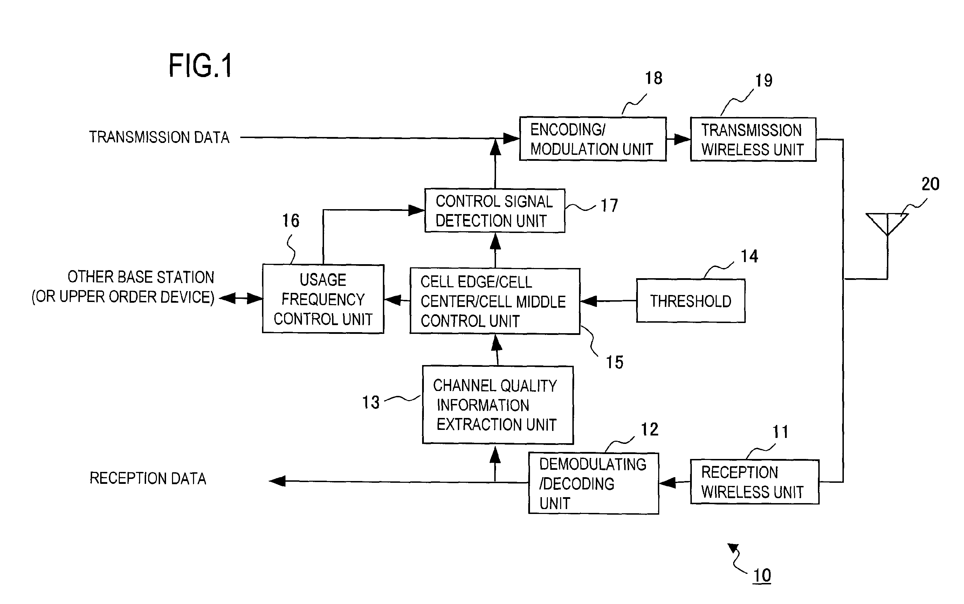

Firstly, a first embodiment will be described. FIG. 1 is a view showing a constitutional example of a base station device ("base station" hereafter) 10 serving as a communication device.

The base station 10 includes a reception wireless unit 11, a demodulation/decoding unit 12, a channel quality extraction unit 13, a threshold storage unit 14, a cell edge/cell center/cell middle selection control unit ("selection control unit" hereafter) 15, a usage frequency control unit 16, a control signal creation unit 17, an encoding/modulation unit 18, a transmission wireless unit 19, and an antenna 20.

The reception wireless unit 11 down-converts and outputs a reception signal received by the antenna 20.

The demodulation/decoding unit 12 demodulates and decodes the reception signal received from the reception wireless unit 11, and outputs the decoded signal to the channel quality extraction unit 13.

The channel quality extraction unit 13 extracts channel quality information measured by the terminal from the decoded signal, and outputs the extracted information to the selection control unit 15.

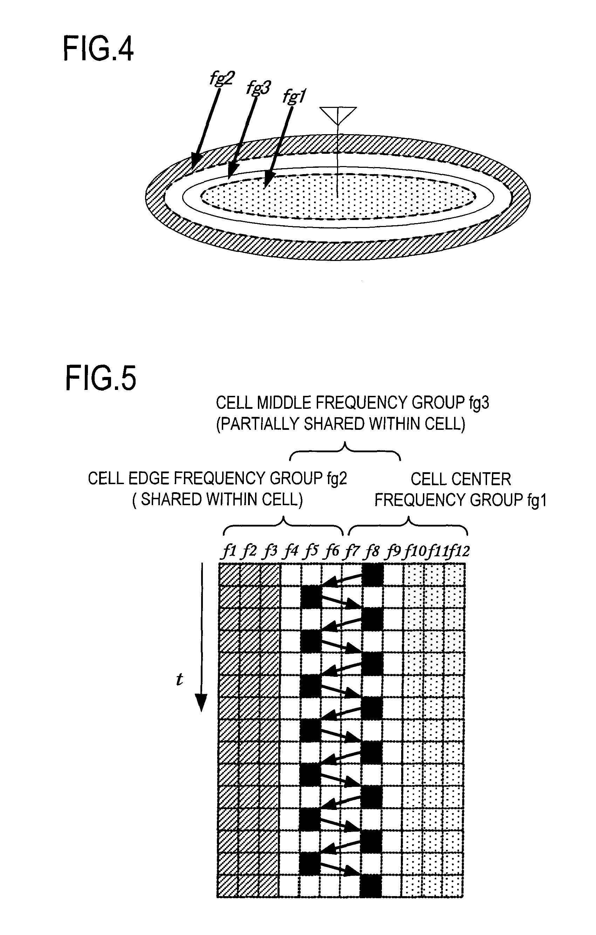

The selection control unit 15 determines, on the basis of the channel quality information, whether the terminal is positioned on a cell edge, in the middle of the cell, or in a cell center. FIG. 4 shows an example of each region. As shown in the drawing, the cell edge is a region in which a service region overlaps an adjacent base station, and the cell center is a region in which this overlap does not occur. The cell middle is an intermediate region between the cell edge and the cell center.

A selection is performed in the following manner, for example. The selection control unit 15 compares a reception field intensity threshold $E_{2th1}$ for discerning the cell edge and the cell middle with a reception field intensity threshold $E_{2th2}$ for discerning the cell middle and the cell center in relation to the channel quality information measured by the terminal (here, a reception field intensity $E_2$). When $E_2 \geq E_{2th2}$, the selection control unit 15 determines that the terminal is in the cell center, when $E_{2th2} > E_2 > E_{2th1}$, the selection control unit 15 determines that the terminal is in the cell middle, and when $E_{2th1} \geq E_2$, the selection control unit 15 determines that the terminal is on the cell edge. The selection control unit 15 then outputs the selected information to the usage frequency control unit 16 and the control signal creation unit 17.

The thresholds $E_{2th1}$, $E_{2th2}$ are stored in the threshold storage unit 14. Further, the channel quality information may be an SIR (Signal to Interference Ratio), a CIR (Carrier to Interference Ratio), or the like.

On the basis of the selection result, the usage frequency control unit 16 selects a usage frequency group and then selects a frequency (or a sub-carrier) to be used from the selected usage frequency group (i.e. allocates a reception frequency of a terminal 50).

As shown in FIG. 4, the usage frequency groups include a cell edge usage frequency group fg2, a cell center usage frequency group fg1, and a cell middle usage frequency group fg3.

The cell edge usage frequency group fg2 is a frequency group including frequencies determined in cooperation with another base station such that the usage frequency does not collide therewith. Accordingly, the base station 10 communicates with the other base station to select a usage frequency from the cell edge usage frequency group fg2. Alternatively, usage frequency information that is managed collectively by an upper order device may be received from the upper order device.

On the other hand, the cell center usage frequency group fg1 is a frequency group including frequencies that can be used without cooperation with another base station.

The cell middle usage frequency group fg3 is a frequency group including frequencies that are at least partially shared (overlapped) with the frequencies of the cell edge and cell center frequency groups fg2, fg1.

Note that these frequency groups fg1 to fg3 may be formed as sub-carriers or as a resource block in which a plurality of sub-carriers are gathered.

Returning to FIG. 1, the control signal creation unit 17 generates a control signal including the selection result from the selection control unit 15 and information relating to the usage frequency from the usage frequency control unit 16. The control signal creation unit 17 also creates a pilot signal as a control signal.

The encoding/modulation unit 18 encodes, modulates, and outputs transmission data and the control signals.

The transmission wireless unit 19 up-converts the signals that have been subjected to modulation and so on, and then outputs the up-converted signals to the antenna 20. The transmission data and control signals are then transmitted to a terminal from the antenna 20. Note that the terminal may be informed of the control signal including the usage frequency information prior to data transmission or at the same time as data transmission.

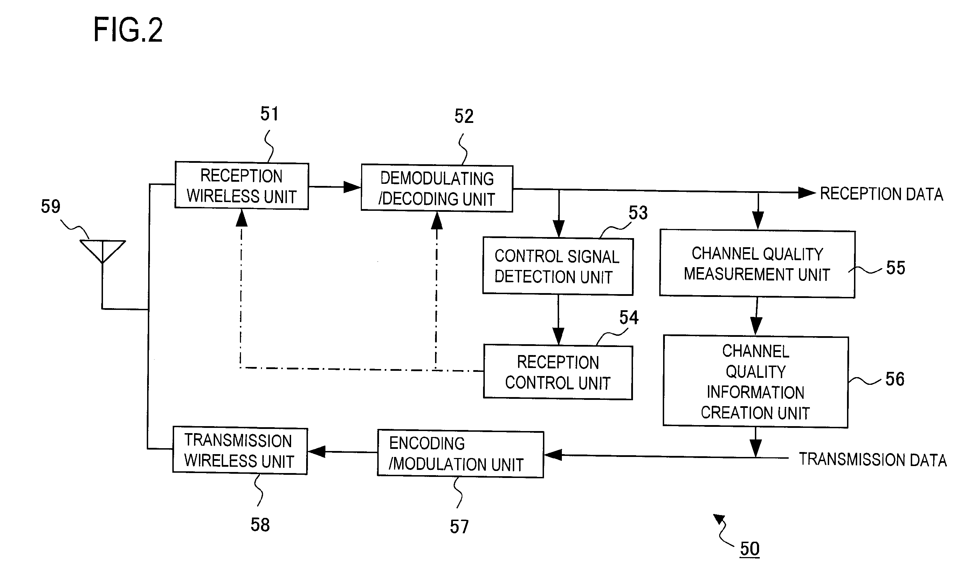

FIG. 2 is a view showing a constitutional example of the terminal 50. The terminal 50 includes a reception wireless unit 51, a demodulation/decoding unit 52, a control signal detection unit 53, a reception control unit 54, a channel quality measurement unit 55, a channel quality information creation unit 56, an encoding/modulation unit 57, a transmission wireless unit 58, and an antenna 59.

The wireless reception unit 51 down-converts a reception signal received by the antenna 59, and outputs the down-converted signal to the demodulation/decoding unit 52.

The demodulation/decoding unit 52 demodulates and decodes the down-converted reception signal.

The control signal detection unit 53 detects the control signal from the signal subjected to demodulation and so on, and outputs the usage frequency included in the control signal to the reception control unit 54.

The reception control unit 54 controls the reception wireless unit 51 and the demodulation/decoding unit 52. More specifically, the reception control unit 54 performs control such that the reception wireless unit 51 receives data from the base station 10 at the usage frequency and demodulation and the like are performed in the demodulation/decoding unit 52 at the usage frequency.

The channel quality measurement unit 55 detects the control signal (pilot signal), and measures a downward direction channel quality on the basis of this signal.

The channel quality information creation unit 56 outputs the channel quality measurement result (or a result obtained by converting the channel quality into a channel quality index) to the encoding/modulation unit 57 as channel quality information.

The encoding/modulation unit 57 encodes and modulates transmission data and the channel quality information and outputs them to the transmission wireless unit 58.

The transmission wireless unit 58 up-converts the signal subjected to modulation and the like and outputs the up-converted signal to the antenna 59. The channel quality information and the transmission data are transmitted to the base station 10 from the antenna 59.

Note that together, the base station 10 and the terminal 50 constitute a mobile communication system.

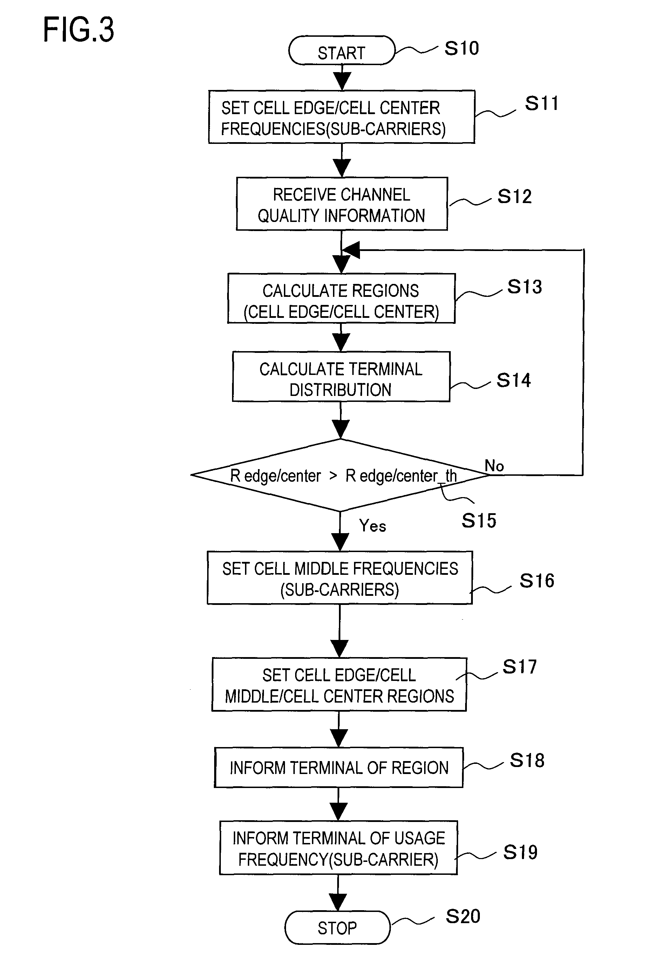

Next, an operation will be described. FIG. 3 is a flowchart showing an example of the processing of the base station 10. This processing is started when FFR execution is begun and performed continuously until FFR execution is terminated, for example.

When the base station 10 begins the processing (S10), the usage frequency control unit 16 of the base station 10 determines the respective frequency groups fg2, fg1 of the cell edge and the cell center (S11). For example, the usage frequency control unit 16 determines the frequencies to be included in the cell edge frequency group fg2. At this time, the usage frequency control unit 16 determines the frequencies to be included in the cell edge frequency group fg2 in cooperation with another base station such that collisions do not occur.

Next, the base station 10 receives the channel quality information from the terminal 50 (S12). The channel quality information is received by the antenna 20 and output to the selection control unit 15.

Next, the selection control unit 15 calculates the cell edge and cell center regions (S13). The cell edge region and cell center region may be fixed or varied in accordance with the cell environment.

Next, the selection control unit 15 calculates a terminal 50 distribution (S14). More specifically, the selection control unit 15 determines, on the basis of the channel quality information, whether the terminal 50 is positioned in the cell edge region or the cell center region. This determination is made as described in the above example. Note that in the determination example described above, the thresholds $E_{2th1}$, $E_{2th2}$ may be varied in accordance with variation in the regions, rather than being set at fixed values.

Next, the selection control unit 15 determines whether or not a ratio $R_{edge/center}$ of the number of terminals positioned on the cell edge and in the cell center is equal to or greater than a threshold $R_{edge/center\_th}$ (S15). Here, a determination is made as to whether or not a large number of terminals are positioned near a boundary between the cell edge and the cell center. The reason for this is that when no terminals exist near the boundary, frequency resources can be utilized effectively by not allocating a cell middle usage frequency to the terminal 50.

When the ratio $R_{edge/center}$ of the number of terminals is equal to or smaller than the threshold $R_{edge/center\_th}$ (No in S15), the processing returns to S13.

When the ratio $R_{edge/center}$ of the number of terminals is greater than the threshold $R_{edge/center\_th}$ (Yes in S15), on the other hand, the selection control unit 15 sets the cell middle frequency group (S16). Here, the selection control unit 15 determines the frequencies to be included in the cell middle frequency group fg3.

Next, the selection control unit 15 calculates the respective regions of the cell edge, the cell middle, and the cell center (S17). Here, the selection control unit 15 calculates the region to be set as the cell edge, the region to be set as the cell middle, and so on.

Next, the selection control unit 15 notifies the terminal 50 of information relating to the calculated regions via the control signal creation unit 17 and so on (S18).

Next, the selection control unit 15 determines the region (cell edge, cell center, or cell middle) in which the terminal 50 is positioned on the basis of the channel quality information (S12), whereupon the usage frequency control unit 16 selects the frequency group fg1 to fg3 belonging to the region and determines a usage frequency (sub-carrier) from the selected group (S19). The control signal creation unit 17 then creates a control signal and notifies the terminal 50 thereof. Note that the notifications of S18 and S19 may be transmitted simultaneously or separately in the form of control signals.

The base station 10 then terminates the series of processes (S20).

The terminal 50 then implements downward data transmission using the usage frequency as a reception frequency obtained from the base station 10.

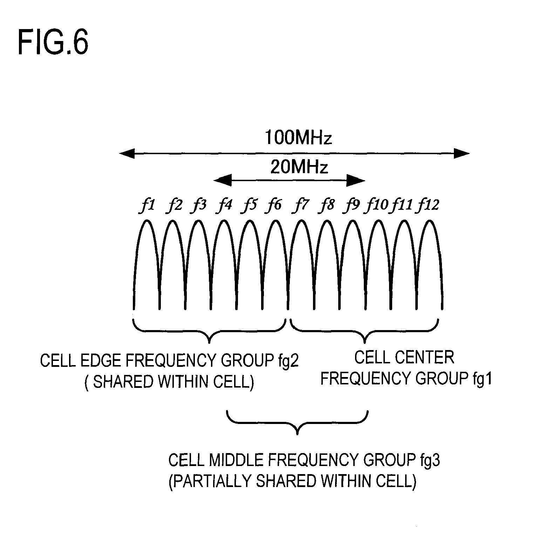

FIG. 5 and FIG. 6 are views showing an example of usage frequency switching and an example of a usage frequency (sub-carrier) configuration, respectively. For example, when the terminal 50 can only receive one of the cell edge usage frequency and the cell center usage frequency due to the reception bandwidth thereof and therefore comes and goes between the cell edge and cell center regions, reception bandwidth switching, or in other words channel switching, must be performed. In this embodiment, as shown in FIG. 5, the frequency band of the cell middle frequency group fg3 is used, and therefore, even when the terminal 50 comes and goes between the cell edge and cell center regions, channel switching does not occur. Hence, the need to perform channel switching processing in the terminal 50 can be eliminated, enabling an improvement in throughput. Note that when the terminal 50 moves from the cell edge region to the cell middle region, channel switching occurs once, but when the terminal 50 moves within the cell middle region thereafter, channel switching does not occur.

In the example described above, the region in which the terminal 50 is positioned is determined using the channel quality information (S19). However, the region in which the terminal 50 is positioned may be determined from information relating to the position of the terminal 50 rather than the channel quality information. In this case, the terminal 50 may measure position information relating to itself and transmit this information to the base station 10, whereupon the selection control unit 15 of the base station 10 determines the region from the position information and then determines the usage frequency.

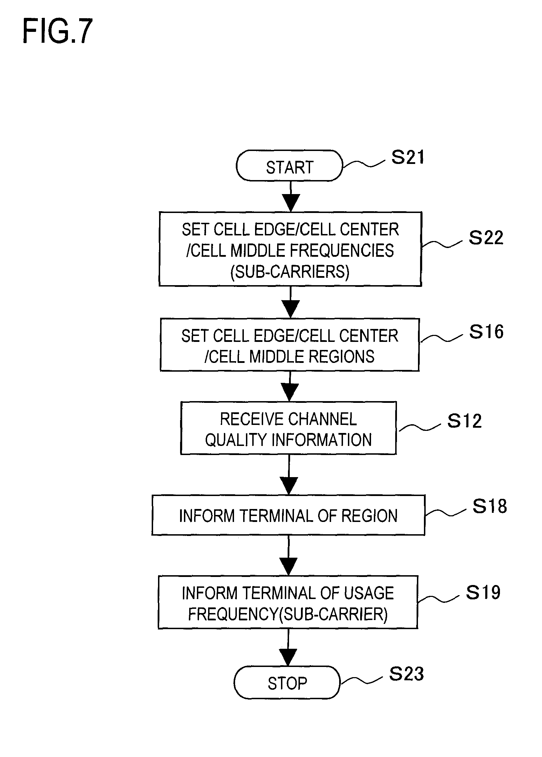

FIG. 7 is a flowchart showing another processing example. When the base station 10 begins the processing (S21), the selection control unit 15 determines the frequencies belonging to the respective frequency groups fg1 to fg3 of the cell edge, the cell center, and the cell middle (S22).

Next, the selection control unit 15 calculates the positions of the respective regions of the cell edge, cell middle, and cell center (S16), and receives the channel quality information measured by the terminal 50 (S17).

Next, the selection control unit 15 determines the region in which the terminal 50 is positioned on the basis of the channel quality information, whereupon the usage frequency control unit 16 determines the usage frequency from the usage frequency groups fg1 to fg3 and notifies the terminal 50 of the determined region and usage frequency (S18, S19). The base station 10 then terminates the series of processes (S23). This processing is an example of processing in which the cell middle frequency group fg3 is used from the start.

(Second Embodiment)

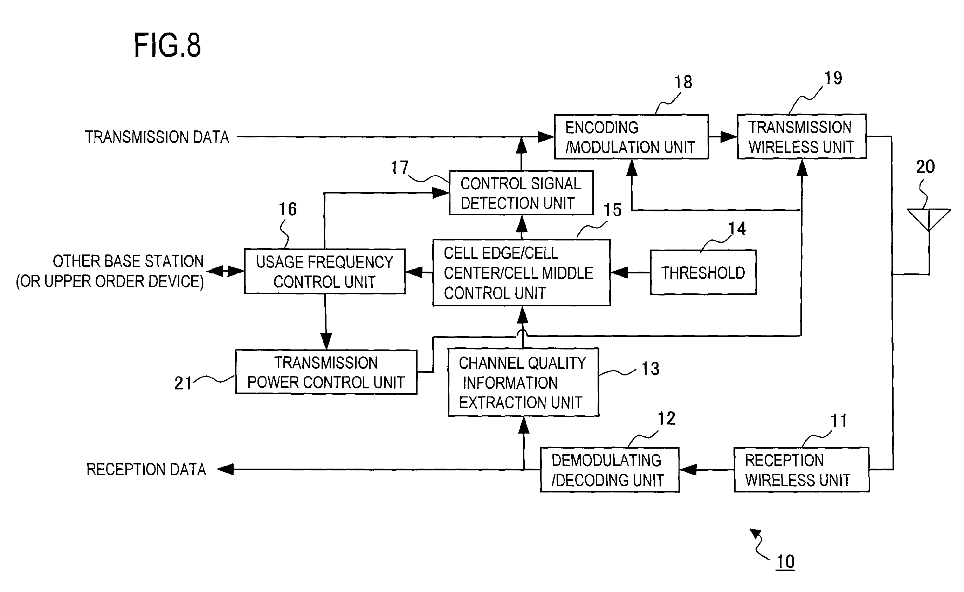

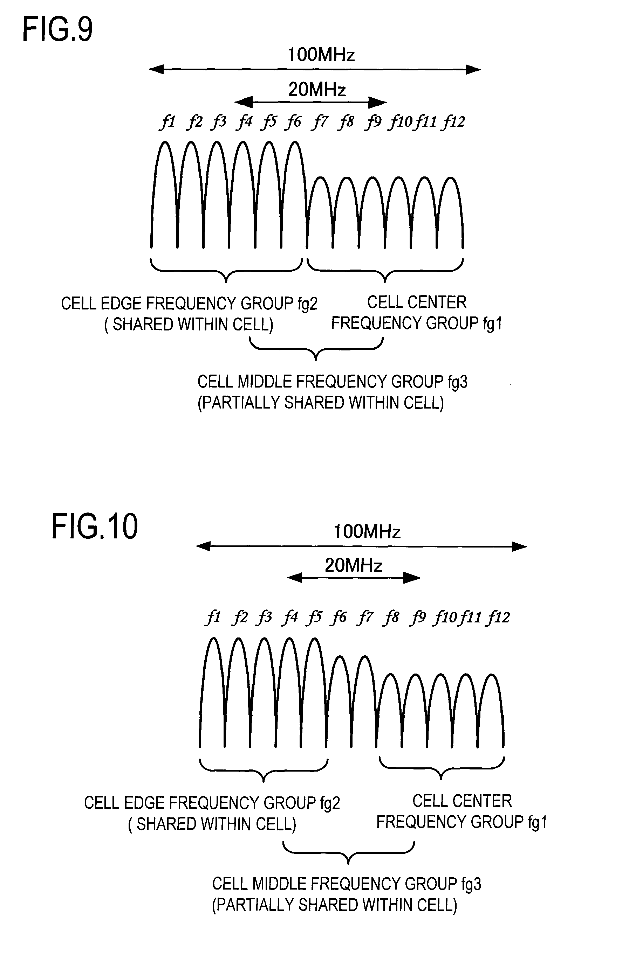

Next, a second embodiment will be described. The second embodiment is an example of transmission power control from the base station 10 to the terminal 50. FIG. 8 is a view showing a constitutional example of the base station 10, and FIGS. 9 to 13 are views showing examples of transmission power at various frequencies.

As shown in FIG. 8, the base station 10 further includes a transmission power control unit 21. The transmission power control unit 21 determines a transmission power in relation to the usage frequency determined (allocated) by the usage frequency control unit 16, and performs control such that data transmission can be performed from the transmission wireless unit 19 at the determined transmission power.

FIG. 9 is a view showing an example of the transmission power controlled by the transmission power control unit 21. The base station 10 must realize a constant transmission characteristic in relation to a terminal 50 on the cell edge. On the other hand, the base station 10 must transmit data to a terminal 50 positioned in the cell center at a suppressed power to ensure that interference with another cell does not occur. When a maximum transmission power relative to the cell edge terminal 50 is set as $P_{edge}$ and a maximum transmission power relative to the cell center terminal 50 is set as $P_{center}$, the transmission power control unit 21 determines the transmission power such that

$$P_{edge} > P_{center} \qquad\qquad (1)$$

is satisfied. The transmission power control unit 21 sets the maximum transmission power $P_{edge}$ of the cell edge terminal 50 in relation to frequencies belonging to the cell edge frequency group fg2 and the cell middle frequency group fg3, and sets the maximum transmission power $P_{center}$ of the cell center in relation to frequencies belonging to the frequency groups fg1, fg3 of the cell center and the cell middle. Conventional values are set as the maximum transmission power, and therefore the maximum transmission power can be set easily.

FIG. 10 is a view showing another example of the transmission power. The cell middle frequency group fg1 includes frequencies (sub-carriers) that belong only to the cell middle group fg3 and do not belong to the frequency groups fg2, fg3 of both the cell edge and the cell middle. In this case, a maximum transmission power of the frequencies belonging only to the cell middle group fg3 is set as $P_{middle}$, and the transmission power control unit 21 determines the transmission power such that

$$P_{edge} > P_{middle} > P_{center} \qquad\qquad (2)$$

is satisfied.

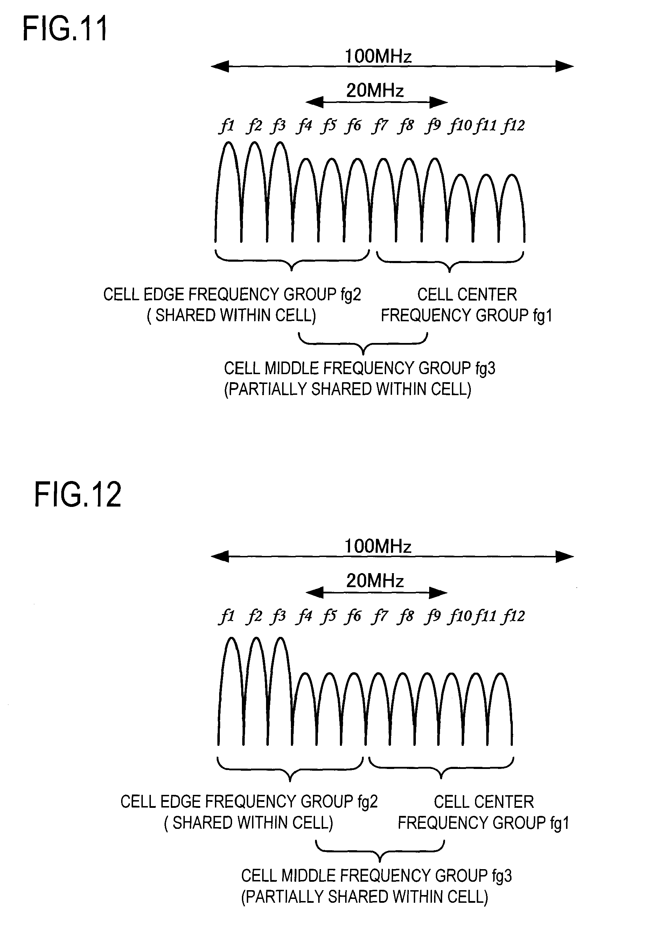

FIG. 11 is a view showing another example of the transmission power. This drawing shows an example in which transmission is performed to all of the frequencies (sub-carriers) belonging to the cell middle frequency group fg3 at the maximum transmission power $P_{middle}$. The relationship shown in Formula (2) above is established in relation to the respective maximum transmission powers.

Here, transmission characteristic deterioration occurring when a cell center frequency is used in relation to a terminal 50 positioned near the boundary between the cell edge and the cell center can be prevented, and an increase in transmission power when a cell edge frequency is used can be prevented, thereby preventing interference with another cell.

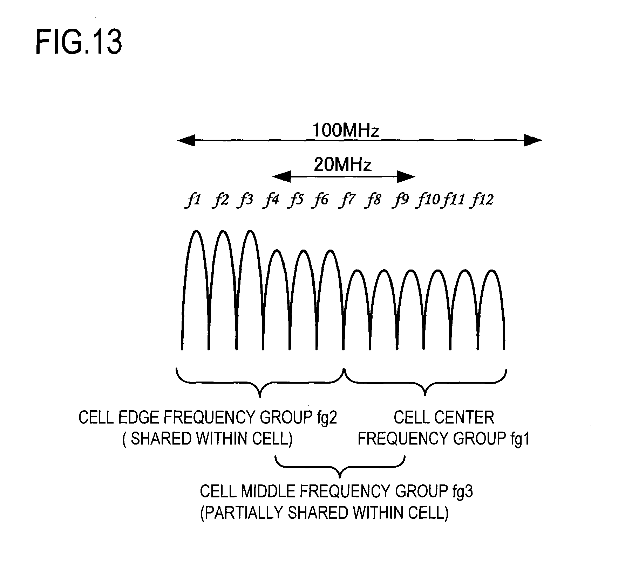

FIG. 12 is a view showing a further example of the transmission power. This drawing shows an example in which the cell center maximum transmission power $P_{center}$ is used in the cell middle frequency group fg3. FIG. 13 is a view showing a further example of the transmission power. Here, the cell middle maximum transmission power $P_{middle}$ is used in relation to frequencies belonging to the cell edge frequency group fg2 and the cell middle frequency group fg3 (or frequencies that belong to the cell middle frequency group fg3 but do not belong to the cell center frequency group fg1).

Thus, the maximum transmission power at each frequency (sub-carrier) can be realized in several variations.

(Third Embodiment)

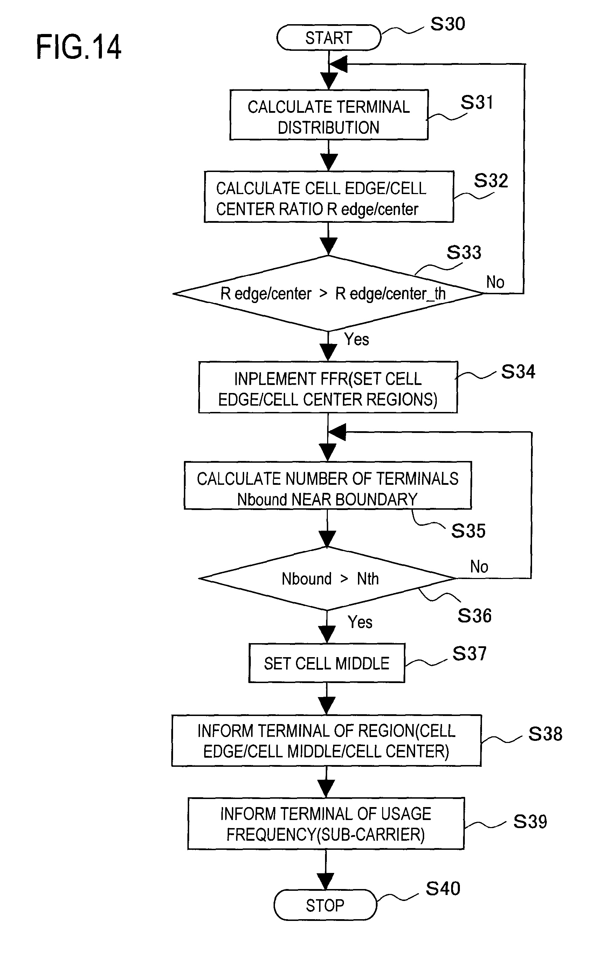

Next, a third embodiment will be described. In the first embodiment, the processing is begun at the start of FFR execution. The third embodiment is an example of processing performed when FFR is not executed. The base station 10 and terminal 50 are constituted as shown in FIGS. 1 and 2, respectively. FIG. 14 is a flowchart showing an example of the processing.

When the base station 10 starts the processing (S30), the selection control unit 15 calculates the terminal distribution (S31). The terminal distribution can be determined from the channel quality information (or position information) received from each terminal by holding information indicating whether each terminal is positioned on the cell edge or in the cell center in the selection control unit 15 for a fixed time period and calculating the number of terminals positioned in each region, for example.

Next, the selection control unit 15 calculates the ratio $R_{edge/center}$ between the number of terminals positioned on the cell edge and the number of terminals positioned in the cell center (S32).

Next, the selection control unit 15 determines whether or not the ratio $R_{edge/center}$ of the number of terminals is larger than the threshold $R_{edge/center\_th}$ (S33). When the ratio $R_{edge/center}$ is equal to or smaller than the threshold $R_{edge/center\_th}$ (No in S33), the processing returns to S31.

When the ratio $R_{edge/center}$ of the number of terminals is greater than the threshold $R_{edge/center\_th}$ (Yes in S33), on the other hand, the selection control unit 15 executes FFR (S34).

The selection control unit 15 then calculates a number of terminals $N_{bound}$ near the boundary between the cell edge and the cell center by determining in relation to each terminal 50 whether or not the terminal 50 is positioned near the boundary on the basis of the channel quality information and so on from the terminal 50 (S35). The determination as to whether the terminal 50 is positioned near the boundary is made as described in the first embodiment.

When the number of terminals $N_{bound}$ near the boundary is larger than a threshold $N_{th}$ (Yes in S36), the selection control unit 15 sets the cell middle (S37), whereupon the usage frequency control unit 16 determines the usage frequency and notifies the terminal 50 of the region in which the terminal 50 is positioned and usage frequency thereof (S38 to S39), similarly to the first embodiment. When the number of terminals $N_{bound}$ is equal to or smaller than the threshold $N_{th}$, on the other hand, the processing returns to S35. The base station 10 then terminates the series of processes (S40).

Hence, in this embodiment, the processing can be started even when FFR is not executed, and the base station 10 executes FFR when a fixed number of terminals are positioned in each of the cell edge region and the cell center region. Then, similarly to the first embodiment, the cell middle is set and the terminal is informed of the usage frequency and so on.

(Fourth Embodiment)

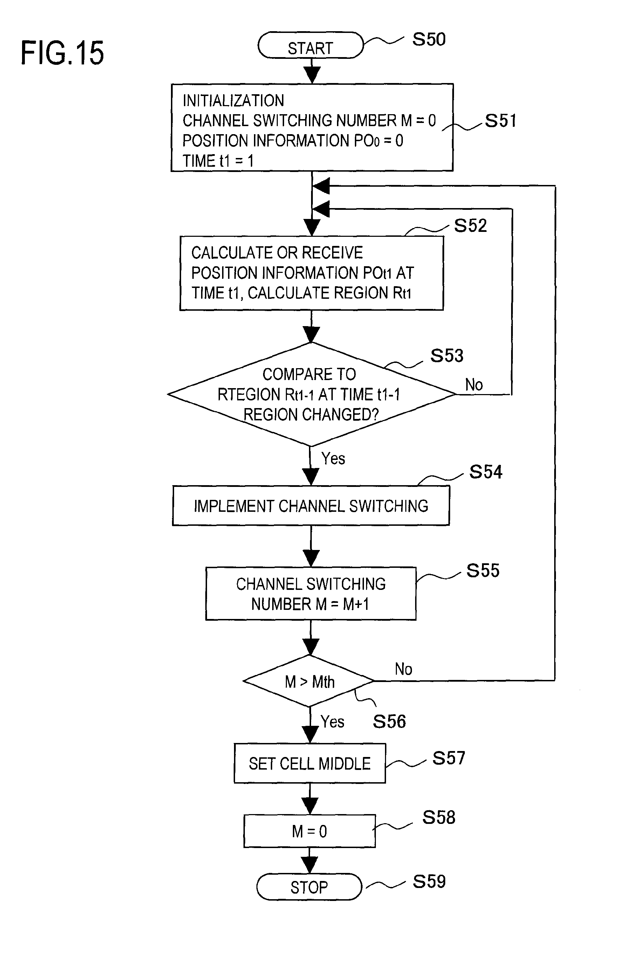

Next, a fourth embodiment will be described. The fourth embodiment is an example of a case in which the terminal 50 performs channel switching (switching from a frequency band in which the terminal 50 can perform reception and transmission to another frequency band) frequently while the base station 10 executes FFR. The base station 10 and terminal 50 are constituted as shown in FIGS. 1 and 2, respectively. FIG. 15 is a flowchart showing an example of processing.

When the base station 10 starts the processing (S50), the selection control unit 15 initializes a channel switching number M, position information $PO_0$ of the terminal 50, and various parameters at a time t1 (M=0, $PO_0$=0, t1=1) (S51).

Next, the selection control unit 15 calculates a position $PO_{t1}$ of the terminal 50 (or receives the terminal position information) at the time t1 on the basis of the channel quality information (or the terminal position information) from the terminal 50, and calculates a region $R_{t1}$ (cell edge, cell center, or cell middle) in which the terminal 50 is positioned at the time t1 (S52). The position is calculated as described in the first embodiment.

The selection control unit 15 then compares a region $R_{t1-1}$ at a time t1-1 to the region $R_{t1}$ at the time t1 to determine whether or not the terminal 50 has moved from the cell edge to the cell center (or from the cell center to the cell edge) (S53). When the region has not changed (No in S53), the processing returns to S52.

On the other hand, when the region has changed (Yes in S53), the terminal 50 executes channel switching (S54), whereupon the selection control unit 15 adds "1" to the channel switching number (S55).

When the channel switching number M exceeds a threshold Mth (Yes in S56), the selection control unit 15 determines that channel switching is occurring frequently in the terminal 50, and therefore sets the cell middle in a similar manner to the first embodiment (S57). Setting of the cell middle includes the processing performed in S16 to S19 of the first embodiment.

When the number M is equal to or smaller than the threshold Mth (No in S56), on the other hand, the processing returns to S52.

After setting the cell middle, the selection control unit 15 sets the channel switching number M to "0" and then terminates the series of processes (S58 to S59).

Hence, in this embodiment, the cell middle is set when channel switching occurs frequently such that if the terminal 50 moves to the cell middle region thereafter, channel switching does not occur. As a result, an improvement in throughput can be achieved in a similar manner to the first embodiment.

To determine the frequency of channel switching, a timer C may be started when channel switching occurs for the first time, for example, and frequent occurrence may be determined when the switching number M exceeds the threshold Mth before the timer C expires (or before the timer C exceeds a timer threshold).

Further, in this embodiment, the thresholds indicating the region in which the terminal 50 is positioned, such as the cell middle, may be varied in a similar manner to the first embodiment. Moreover, the regions may be calculated in accordance with the cell environment.

(Fifth Embodiment)

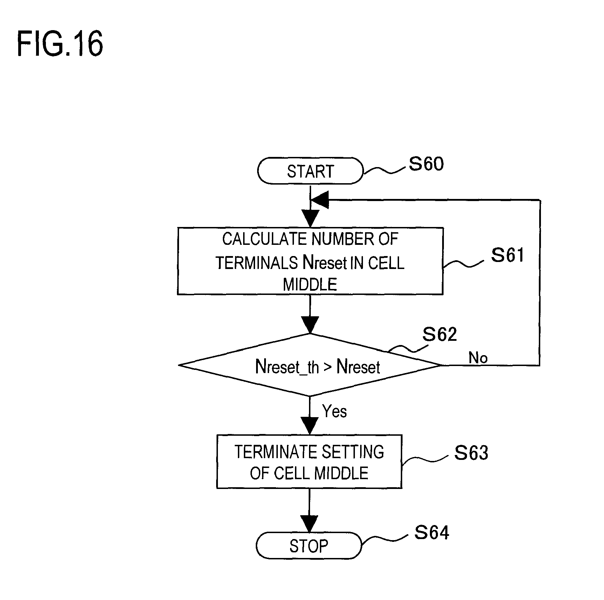

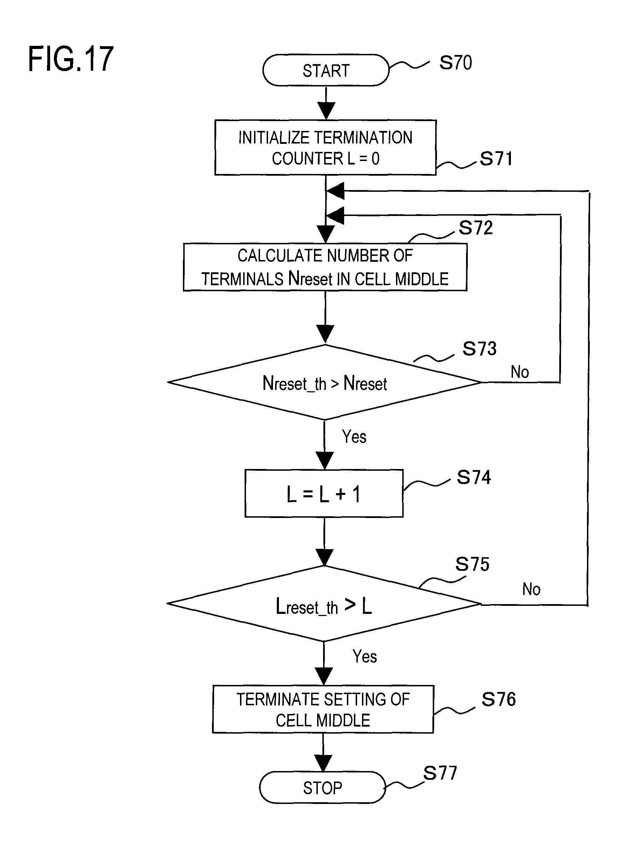

Next, a fifth embodiment will be described. The fifth embodiment is an example in which setting of the cell middle is terminated. The base station 10 and terminal 50 are constituted as shown in FIGS. 1 and 2, respectively. FIGS. 16 and 17 are flowcharts showing examples of processing according to this embodiment.

As shown in FIG. 16, the selection control unit 15 of the base station 10 calculates a number of terminals $N_{reset}$ positioned in the cell middle region (S61), and terminates setting of the cell middle (S63) when the number of terminals $N_{reset}$ is smaller than a threshold $N_{reset\_th}$ (Yes in S62). When the number of terminals $N_{reset}$ is equal to or greater than the threshold $N_{reset\_th}$ (No in S62), setting of the cell middle is not terminated.

The base station 10 then informs the terminal 50 that setting of the cell middle has been terminated, for example, and provides information indicating whether the terminal 50 is positioned on the cell edge or in the cell center to the terminal 50 together with the usage frequency (sub-carrier). The base station 10 then executes FFR between the cell edge and the cell center.

As shown in FIG. 17, a number L by which the number of terminals has fallen below the threshold may be counted (S74) such that setting of the cell middle may be terminated (S76) when the counted number L falls below a threshold $L_{reset\_th}$ (Yes in S75). When the counted number L is equal to or greater than the threshold $L_{reset\_th}$ (No in S75), setting of the cell middle is not terminated.

Further, when the counted number L falls below the threshold (Yes in S75), a timer C may be activated, and setting of the cell middle may be terminated if the counted number exceeds the threshold before the timer C expires.

By terminating setting of the cell middle when the number of terminals positioned in the cell middle is small, the frequency resources can be utilized effectively.

(Sixth Embodiment)

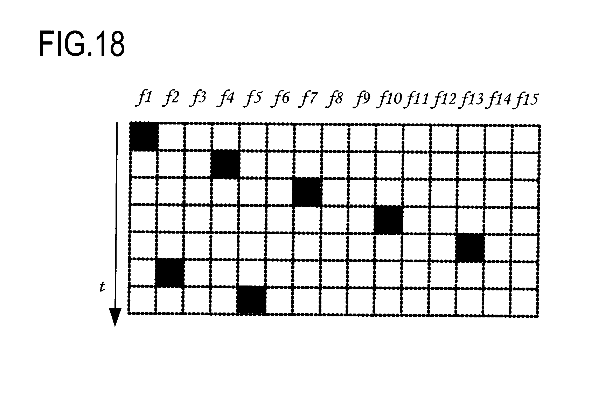

Next, a sixth embodiment will be described. The sixth embodiment is an example of a case in which frequency hopping is executed. Frequency hopping denotes performing communication while switching the usage frequency at fixed time intervals, and since the usage frequency is switched at fixed time intervals, a frequency diversity effect is generated. Furthermore, if noise is generated at a certain frequency, error correction can be performed by a signal transmitted at another frequency, and therefore frequency hopping exhibits a noise resistance effect. FIG. 18 is a view showing an example of frequency switching through frequency hopping.

When the cell edge frequency group and the cell center frequency group are provided while the base station 10 or the terminal 50 executes frequency hopping, the frequency may be switched between the frequency groups. As described above in the first embodiment, when the maximum reception bandwidth of the terminal 50 is identical to the width of the cell edge or cell center frequency group fg2, fg1, for example, frequency switching between the frequency groups is performed as channel switching processing in the terminal 50. Therefore, by providing the cell middle frequency group fg3, similarly to the first embodiment, the terminal 50 can move within the cell middle, and as a result, channel switching can be eliminated.

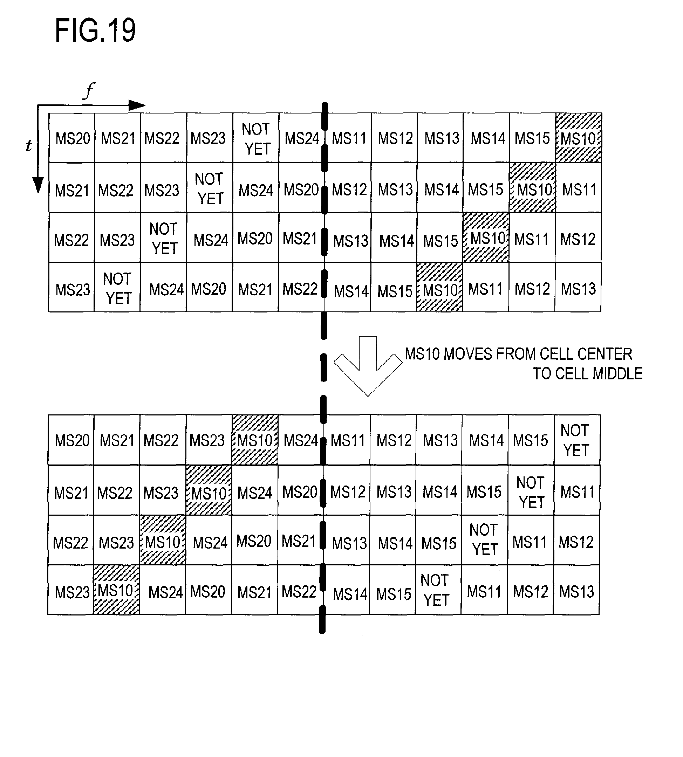

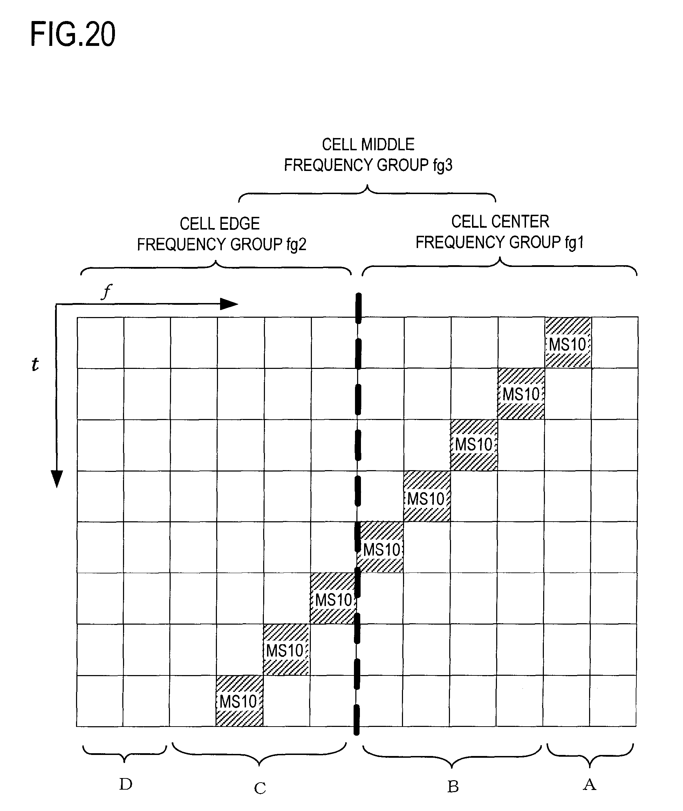

FIGS. 19 and 20 are views showing execution examples of frequency hopping. For example, the usage frequency control unit 16 of the base station 10 executes frequency hopping at frequencies that belong to the cell center frequency group fg1 but do not belong to the cell middle frequency group fg3 (a region A in FIG. 20). When frequency hopping is performed, a hopping pattern (frequency modification pattern) may be prepared in advance (FIGS. 18 and 19 etc.) or the frequency may be determined (allocated) at fixed time intervals.

When the terminal 50 moves to the cell middle thereafter, the usage frequency control unit 16 executes frequency hopping at the frequencies that belong to the cell center frequency group fg1 but do not belong to the cell middle frequency group fg3 (the region A in FIG. 20) and at frequencies that belong to both the cell center frequency group fg1 and the cell middle frequency group fg3 (a region B in FIG. 20). In this case, frequency hopping is performed in accordance with a hopping pattern or the like relating to these two frequency bands (the regions A and B).

Then, when the terminal 50 moves from the cell middle in a cell edge direction, the usage frequency control unit 16 executes frequency hopping at frequencies belonging to both the cell middle and the cell edge (a region C in FIG. 20).

A hopping pattern or a frequency may be selected such that frequency hopping is performed at frequencies belonging to each region. In other words, the frequencies included in the frequency hopping patterns of each region are overlapped at least partially. Then, when the terminal 50 moves between the regions, as shown in FIG. 20, a hopping pattern is prepared, or a frequency is selected (allocated), such that frequency hopping is performed using an adjacent frequency. In so doing, channel switching can be performed smoothly in the terminal 50.

As described above in the first embodiment, the position of the terminal 50 is determined from the channel quality information or the terminal position information obtained from the terminal 50. In this example, in which frequency hopping is performed, the determined usage frequency is likewise transmitted to the terminal 50 and used as a reception frequency during downward data transmission.

Further, when the terminal 50 moves between the regions, for example from the cell edge to the cell middle, the movement timing of the terminal 50 may be estimated by comparing the channel quality information and so on for a fixed time period or the like such that frequency hopping is performed in accordance with the timing.

Moreover, in a case where frequency hopping is executed only at the cell edge or only in the cell center, the frequency hopping may be performed using a different hopping pattern or the like to that of the cell middle, which does not include the frequencies belonging to the cell middle.

(Seventh Embodiment)

Next, a seventh embodiment will be described. In the first to sixth embodiments, examples of downward data transmission were described. In other words, these embodiments relate to examples in which the reception frequency of the terminal 50 is determined. The seventh embodiment is an example of upward data transmission. In other words, this embodiment relates to an example in which a transmission frequency of the terminal 50 is determined.

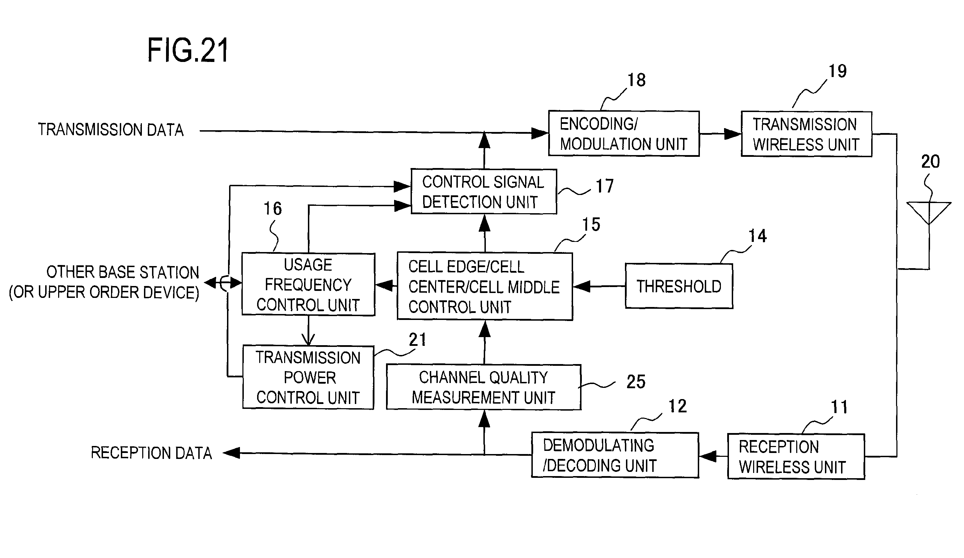

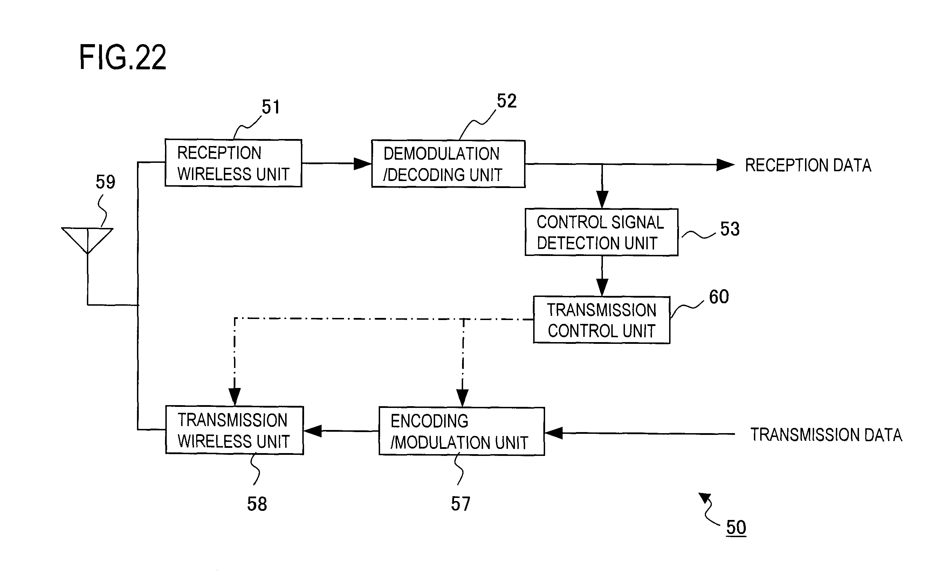

FIGS. 21 and 22 are views showing constitutional examples of the base station 10 and the terminal 50, respectively. The base station 10 further includes a channel quality measurement unit 25. The channel quality measurement unit 25 measures an upward direction channel quality using a signal from the terminal 50, and outputs a measurement result to the selection control unit 15. Similarly to the first embodiment, the selection control unit 15 determines whether the terminal 50 is positioned on the cell edge, in the cell center, or in the cell middle on the basis of the measurement result. The usage frequency control unit 16 determines the usage frequency (the upward direction transmission frequency of the terminal 50) from the frequency groups fg1 to fg3 belonging to the position of the terminal 50, and notifies the terminal 50 of the determined usage frequency in the form of a control signal.

FIG. 22 is a constitutional example of the terminal 50. The terminal 50 further includes a transmission control unit 60. The transmission control unit 60 controls the encoding/modulation unit 57 and the transmission wireless unit 58 such that transmission data can be transmitted at the usage frequency obtained from the base station 10.

Further, when the transmission power control unit 21 of the base station 10 performs transmission power control (second embodiment), a maximum transmission power value is determined in accordance with the usage frequency. The terminal 50 is then notified of the maximum transmission power, whereupon the transmission control unit 60 of the terminal 50 controls the transmission wireless unit 58 and so on such that data can be transmitted at the notified transmission power.

Hence, in the seventh embodiment also, when the terminal 50 comes and goes between the cell edge and the cell center, the terminal 50 can transmit data to the base station 10 using a cell middle frequency, and therefore channel switching can be avoided, leading to an improvement in throughput.

Note that the seventh embodiment may be implemented in any of the first to sixth embodiments described above.

(Other embodiments)

In the first to seventh embodiments, examples in which the respective frequency groups fg1 to fg3 are provided as single groups were described, but each frequency group fg1 to fg3 may be divided into a plurality of groups. For example, a plurality of cell edge frequency groups fg2 may be provided.

Further, in the first to seventh embodiments, the position of the terminal 50 is determined by the selection control unit 15 of the base station 10. However, the terminal 50 may determine its own position and inform the base station 10 thereof. For example, the terminal 50 may include the selection control unit 15 and determine its own position using the control signal detection unit 53 and so on.

Furthermore, in the first to seventh embodiments, the base station 10 sets the cell middle and allocates the usage frequency. However, this processing may be performed by an upper order device (or a wireless control device) that manages a plurality of base stations. In this case, the upper order device transmits the determined usage frequency to the base station, whereupon the base station informs the terminal thereof. The upper order device may be constituted as shown in FIG. 1, for example.

The present invention may be implemented in the form of software executed by a processor of a base station in a mobile communication system. Such software may be recorded on a computer-readable medium.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment (s) of the present inventions have been described in detail, it should be understood that the various changes, substitutions, and alterations could be made hereto without departing from the scope of the claims.

**Claims**

1. A base station device(10) that performs wireless communication with a terminal device(50), **characterized in that**:

   the base station device(10) includes:
   a setting unit(15) arranged to set a first frequency group(fg2) in which frequencies that differ from frequencies used in an adjacent base station device are used, a second frequency group (fg1) including different frequencies to the frequencies included in the first frequency group(fg2), and a third frequency group(fg3) including frequencies that overlap at least partially the frequencies included in the first or second frequency group(fg2,fg1),
   an allocating unit (16) arranged to allocate a frequency included in one of the first to third frequency groups (fg1-fg3) terminal device(50); and
   a transmission unit arranged to transmit (19) the allocated frequency to the terminal device(50).

2. The base station device(10) according to claim 1,
   wherein the setting unit (15) sets the first frequency group (fg2) in a first region having a service region that overlaps the adjacent base station device, and sets the second frequency group(fg1) in a second region having a service region that does not overlap the adjacent base station device.

3. The base station device(10) according to claim 2,
   wherein the setting unit (15) sets the third frequency group (fg3) when the number of the terminal devices(50) positioned on a boundary between the first region and the second region is equal to or more than a threshold.

4. The base station device(10) according to claim 1,
   wherein the setting unit (15) sets the third frequency group (fg3) when the number of channel switches, in which the terminal device (50) switches the frequency between the first and second frequency groups (fg2, fg1), is equal to or more than a threshold.

5. The base station device(10) according to claim 2,
   wherein the setting unit(15) terminates setting of the third frequency group (fg3) when the number of the terminal devices (50) positioned on a boundary between the first region and the second region is equal to or smaller than a threshold.

6. The base station device (10) according to any preceding claim, wherein the setting unit (15) sets first to third frequency hopping patterns respectively such that the frequencies included in each of the first to third frequency groups' fg1-fg3) change to a different frequency within the respective frequency groups after a fixed time period, and
   the allocating unit (15) allocates the frequencies using the first to third frequency hopping patterns.

7. The base station device (10) according to any preceding claim, further comprising a transmission power control unit (21) for determining a transmission power corresponding to the allocated frequency,
   wherein the transmission power control unit(21) transmits data to the terminal device(50) at the transmission power or informs the terminal device(50) of the transmission power by outputting the transmission power to the transmission unit(19).

8. The base station device (10) according to any preceding claim, wherein the frequency transmitted to the terminal device (50) by the transmission unit (19) is a reception frequency at which the terminal device(50) receives data from the base station device(10) or a transmission frequency at which the terminal device(50) transmits data to the base station device(10).

9. A frequency allocation method for a base station device (10) that performs wireless communication with a terminal device(50), comprising:

   setting a first frequency group(fg2) in which frequencies that differ from frequencies used in an adjacent base station device are used, a second frequency group(fg1) including different frequencies to the frequencies included in the first frequency group (fg2), and a third frequency group (fg3) including frequencies that overlap at least partially the frequencies included in the first or second frequency group (fg2 or fg1);

allocating a frequency included in one of the first to third frequency groups (fg1-fg3) to the terminal device (50) ; and

transmitting the allocated frequency to the terminal device(10).

10. A mobile communication system having a terminal device(10) and a base station device(50), wherein the base station device(10) comprises:

a setting unit(15) arranged to set a first frequency group(fg2) in which frequencies that differ from frequencies used in an adjacent base station device are used, a second frequency group(fg1) including different frequencies to the frequencies included in the first frequency group(fg2), and a third frequency group(fg3) including frequencies that overlap at least partially the frequencies included in the first or second frequency group(fg2 or fg1);

an allocating unit (16) arranged to allocate a frequency included in one of the first to third frequency groups (fg1-fg3) to the terminal device(50); and

a transmission unit(10) arranged to transmit the allocated frequency to the terminal device(50), and wherein the terminal device (50) comprises a reception unit (51) for receiving the allocated frequency, and the terminal device (50) is arranged to receive data from the base station device (10) or transmits data to the base station device(10) at the allocated frequency.

11. A communication device comprising:

a setting unit(15) arranged to set a first frequency group(fg2) in which frequencies that differ from frequencies used in an adjacent base station device(10) are used, a second frequency group(fg1) including different frequencies to the frequencies included in the first frequency group(fg2), and a third frequency group(fg3) including frequencies that overlap at least partially the frequencies included in the first or second frequency group(fg2 or fg1;

an allocating unit (16) arranged to allocate a frequency included in one of the first to third frequency groups(fg1-fg23)to a terminal device(50); and

a transmission unit(19) arranged to transmit the allocated frequency to a base station device (10) accommodating the terminal device(50).

12. Software which, when executed by a processor of a base station in a mobile communication system, causes the base station to provide the communication device according to claim 11.

13. A computer-readable medium on which is recorded the software according to claim 12.

# FIG.1

TRANSMISSION DATA → ENCODING/MODULATION UNIT `18` → TRANSMISSION WIRELESS UNIT `19`

CONTROL SIGNAL DETECTION UNIT `17`

OTHER BASE STATION (OR UPPER ORDER DEVICE) ↔ USAGE FREQUENCY CONTROL UNIT `16`

CELL EDGE/CELL CENTER/CELL MIDDLE CONTROL UNIT `15`

THRESHOLD `14`

CHANNEL QUALITY INFORMATION EXTRACTION UNIT `13`

DEMODULATING /DECODING UNIT `12`

RECEPTION WIRELESS UNIT `11`

RECEPTION DATA

`20`

`10`

# FIG.2

EP 2 141 946 A1

# FIG.3

START —— S10

↓

SET CELL EDGE/CELL CENTER
FREQUENCIES(SUB-CARRIERS) —— S11

↓

RECEIVE CHANNEL
QUALITY INFORMATION —— S12

↓

CALCULATE REGIONS
(CELL EDGE/CELL CENTER) —— S13

↓

CALCULATE TERMINAL
DISTRIBUTION —— S14

↓

$R$ edge/center $>$ $R$ edge/center_th —— No

S15

↓ Yes

SET CELL MIDDLE FREQUENCIES
(SUB-CARRIERS) —— S16

↓

SET CELL EDGE/CELL
MIDDLE/CELL CENTER REGIONS —— S17

↓

INFORM TERMINAL OF REGION —— S18

↓

INFORM TERMINAL OF USAGE
FREQUENCY(SUB-CARRIER) —— S19

↓

STOP —— S20

# FIG.4

# FIG.5

CELL MIDDLE FREQUENCY GROUP fg3
(PARTIALLY SHARED WITHIN CELL)

CELL EDGE FREQUENCY GROUP fg2
( SHARED WITHIN CELL)

CELL CENTER
FREQUENCY GROUP fg1

# FIG.6

100MHz

20MHz

*f1   f2   f3   f4   f5   f6   f7   f8   f9 f10 f11 f12*

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

# FIG.7

START ~ S21

↓

SET CELL EDGE/CELL CENTER /CELL MIDDLE FREQUENCIES (SUB-CARRIERS) ~ S22

↓

SET CELL EDGE/CELL CENTER /CELL MIDDLE REGIONS ~ S16

↓

RECEIVE CHANNEL QUALITY INFORMATION ~ S12

↓

INFORM TERMINAL OF REGION ~ S18

↓

INFORM TERMINAL OF USAGE FREQUENCY(SUB-CARRIER) ~ S19

↓

STOP ~ S23

## FIG.8

TRANSMISSION DATA →

ENCODING /MODULATION UNIT — 18

TRANSMISSION WIRELESS UNIT — 19

20

17 — CONTROL SIGNAL DETECTION UNIT

16

OTHER BASE STATION (OR UPPER ORDER DEVICE) ↔

USAGE FREQUENCY CONTROL UNIT

15 — CELL EDGE/CELL CENTER/CELL MIDDLE CONTROL UNIT

14 — THRESHOLD

21 — TRANSMISSION POWER CONTROL UNIT

CHANNEL QUALITY INFORMATION EXTRACTION UNIT — 13

12 — DEMODULATING /DECODING UNIT

11 — RECEPTION WIRELESS UNIT

RECEPTION DATA ←

10

## FIG.9

100MHz

20MHz

f1  f2  f3  f4  f5  f6  f7  f8  f9  f10 f11 f12

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

## FIG.10

100MHz

20MHz

f1  f2  f3  f4  f5  f6  f7  f8  f9  f10 f11 f12

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

# FIG.11

100MHz

20MHz

f1  f2  f3  f4  f5  f6  f7  f8  f9  f10 f11 f12

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

# FIG.12

100MHz

20MHz

f1  f2  f3  f4  f5  f6  f7  f8  f9  f10 f11 f12

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

# FIG.13

100MHz

20MHz

*f1  f2  f3  f4  f5  f6  f7  f8  f9  f10 f11 f12*

CELL EDGE FREQUENCY GROUP fg2
( SHARED WITHIN CELL)

CELL CENTER
FREQUENCY GROUP fg1

CELL MIDDLE FREQUENCY GROUP fg3
(PARTIALLY SHARED WITHIN CELL)

FIG.14

START — S30

↓

CALCULATE TERMINAL DISTRIBUTION — S31

↓

CALCULATE CELL EDGE/CELL CENTER RATIO R edge/center — S32

↓

S33

R edge/center > R edge/center_th — No

↓ Yes

INPLEMENT FFR(SET CELL EDGE/CELL CENTER REGIONS) — S34

↓

CALCULATE NUMBER OF TERMINALS Nbound NEAR BOUNDARY — S35

↓

Nbound > Nth — No

↓ Yes S36

SET CELL MIDDLE — S37

↓

INFORM TERMINAL OF REGION(CELL EDGE/CELL MIDDLE/CELL CENTER) — S38

↓

INFORM TERMINAL OF USAGE FREQUENCY(SUB-CARRIER) — S39

↓

STOP — S40

**FIG.15**

```
                    ( START )  ～ S50
                       │
                       ▼
  ┌─────────────────────────────────┐
  │ INITIALIZATION                  │
  │ CHANNEL SWITCHING NUMBER M = 0  │ ～ S51
  │ POSITION INFORMATION PO₀ = 0    │
  │ TIME t1 = 1                     │
  └─────────────────────────────────┘
                       │
                       ▼◄───────────────────┐
  ┌─────────────────────────────────┐ ～ S52 │
  │ CALCULATE OR RECEIVE            │        │
  │ POSITION INFORMATION POt1 AT    │        │
  │ TIME t1, CALCULATE REGION Rt1   │        │
  └─────────────────────────────────┘        │
                       │                      │
                       ▼                      │
              ◇ COMPARE TO ◇ ～ S53           │
              ◇ RTEGION Rt1-1 AT TIME t1-1 ◇─ No ┤
              ◇ REGION CHANGED? ◇             │
                       │ Yes                  │
                       ▼                      │
  ┌─────────────────────────────────┐ ～ S54  │
  │ IMPLEMENT CHANNEL SWITCHING     │        │
  └─────────────────────────────────┘        │
                       │                      │
                       ▼                      │
  ┌─────────────────────────────────┐ ～ S55  │
  │ CHANNEL SWITCHING               │        │
  │ NUMBER M = M+1                  │        │
  └─────────────────────────────────┘        │
                       │                      │
                       ▼                      │
              ◇ M > Mth ◇ ── No ─────────────┘
                  │  S56
                  │ Yes
                  ▼
  ┌─────────────────────────────────┐ ～ S57
  │ SET CELL MIDDLE                 │
  └─────────────────────────────────┘
                  │
                  ▼
  ┌─────────────────────────────────┐ ～ S58
  │ M = 0                           │
  └─────────────────────────────────┘
                  │
                  ▼
              ( STOP )  ～ S59
```

# FIG.16

```
                    ┌─────────────┐
                    │    START    │────── S60
                    └──────┬──────┘
                           │        ◄────────────────────┐
                           ▼                              │
              ┌──────────────────────────┐               │
              │   CALCULATE NUMBER OF     │               │
              │  TERMINALS Nreset IN CELL │───── S61      │
              │         MIDDLE            │               │
              └─────────────┬────────────┘               │
                            │                             │
                            ▼        S62                  │
                      ╱──────────────╲                    │
                    ╱                  ╲     No            │
                  ╱   Nreset_th > Nreset ╲─────────────────┘
                    ╲                  ╱
                      ╲──────────────╱
                            │
                            │ Yes
                            ▼
              ┌──────────────────────────┐
              │    TERMINATE SETTING      │───── S63
              │     OF CELL MIDDLE        │
              └─────────────┬────────────┘
                            │
                            ▼
                    ┌─────────────┐
                    │    STOP     │────── S64
                    └─────────────┘
```

# FIG.17

```
                    START                S70

                      ↓

            INITIALIZE TERMINATION
              COUNTER L = 0             S71

                      ↓

            CALCULATE NUMBER OF         S72
         TERMINALS Nreset IN CELL MIDDLE

                      ↓

              Nreset_th > Nreset        S73    No

                     Yes ↓

                  L = L + 1             S74

                      ↓

               Lreset_th > L            S75    No

                     Yes ↓

            TERMINATE SETTING OF        S76
                 CELL MIDDLE

                      ↓

                    STOP               S77
```

FIG.18

# FIG.19

| | | | | | | | | | | | |
|---|---|---|---|---|---|---|---|---|---|---|---|
| MS20 | MS21 | MS22 | MS23 | NOT YET | MS24 | MS11 | MS12 | MS13 | MS14 | MS15 | MS10 |
| MS21 | MS22 | MS23 | NOT YET | MS24 | MS20 | MS12 | MS13 | MS14 | MS15 | MS10 | MS11 |
| MS22 | MS23 | NOT YET | MS24 | MS20 | MS21 | MS13 | MS14 | MS15 | MS10 | MS11 | MS12 |
| MS23 | NOT YET | MS24 | MS20 | MS21 | MS22 | MS14 | MS15 | MS10 | MS11 | MS12 | MS13 |

⬇ MS10 MOVES FROM CELL CENTER
TO CELL MIDDLE

| | | | | | | | | | | | |
|---|---|---|---|---|---|---|---|---|---|---|---|
| MS20 | MS21 | MS22 | MS23 | MS10 | MS24 | MS11 | MS12 | MS13 | MS14 | MS15 | NOT YET |
| MS21 | MS22 | MS23 | MS10 | MS24 | MS20 | MS12 | MS13 | MS14 | MS15 | NOT YET | MS11 |
| MS22 | MS23 | MS10 | MS24 | MS20 | MS21 | MS13 | MS14 | MS15 | NOT YET | MS11 | MS12 |
| MS23 | MS10 | MS24 | MS20 | MS21 | MS22 | MS14 | MS15 | NOT YET | MS11 | MS12 | MS13 |

# FIG.20

CELL MIDDLE
FREQUENCY GROUP fg3

CELL EDGE
FREQUENCY GROUP fg2

CELL CENTER
FREQUENCY GROUP fg1

# FIG.21

# FIG.22

EP 2 141 946 A1

# FIG.23

# FIG.24

CELL EDGE FREQUENCY GROUP fg2
( SHARED WITHIN CELL)

CELL CENTER
FREQUENCY GROUP fg1

FIG.25

RECEPOTION
POWER

CELL BOUNDARY

RECEPOTION
POWER

— — ▶ NO HYSTERESIS

———▶ HYSTERESIS

FIG.26

# FIG.27

CELL EDGE FREQUENCY GROUP fg2
( SHARED WITHIN CELL)

CELL CENTER
FREQUENCY GROUP fg1

$f1$  $f2$  $f3$  $f4$  $f5$  $f6$  $f7$  $f8$  $f9$ $f10$  $f11$ $f12$

$t$

Europäisches
Patentamt

European
Patent Office

Office européen
des brevets

# EUROPEAN SEARCH REPORT

Application Number

EP 09 15 8380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/057971 A (QUALCOMM INC [US]; CHEN WANSHI [US]; ZHANG XIAOXIA [US]; MALLADI DURGA) 15 May 2008 (2008-05-15)<br>* page 3, paragraph 10 - page 4, paragraph 14 *<br>* page 5, paragraph 19 - page 7, paragraph 26 *<br>* page 9, paragraph 34 *<br>* page 18, paragraph 83 - page 22, paragraph 96 *<br>----- | 1-13 | INV.<br>H04W16/10<br>H04W72/04 |
| A | EP 1 773 085 A (SAMSUNG ELECTRONICS CO LTD [KR]) 11 April 2007 (2007-04-11)<br>* column 1, paragraph 3 - paragraph 5 *<br>* column 4, paragraph 16 *<br>* column 7, paragraph 30 - column 8, paragraph 35 *<br>----- | 1-13 | |
| A | WO 2008/033802 A (QUALCOMM INC [US]; KHANDEKAR AAMOD [US]; GOROKHOV ALEXEI [US]; PRAKASH) 20 March 2008 (2008-03-20)<br>* page 18, paragraph 83 - paragraph 85 *<br>----- | 1-13 | TECHNICAL FIELDS SEARCHED (IPC)<br><br>H04W |

The present search report has been drawn up for all claims

| Place of search | Date of completion of the search | Examiner |
|---|---|---|
| Berlin | 29 October 2009 | García, Montse |

EPO FORM 1503 03.82 (P04C01)

## ANNEX TO THE EUROPEAN SEARCH REPORT
## ON EUROPEAN PATENT APPLICATION NO.

EP 09 15 8380

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2009

| Patent document cited in search report | | Publication date | Patent family member(s) | | Publication date |
|---|---|---|---|---|---|
| WO 2008057971 | A | 15-05-2008 | AU | 2007317375 A1 | 15-05-2008 |
| | | | CA | 2667098 A1 | 15-05-2008 |
| | | | EP | 2090011 A2 | 19-08-2009 |
| | | | KR | 20090085661 A | 07-08-2009 |
| EP 1773085 | A | 11-04-2007 | AU | 2006300125 A1 | 19-04-2007 |
| | | | CA | 2621661 A1 | 19-04-2007 |
| | | | JP | 2009510967 T | 12-03-2009 |
| | | | WO | 2007043782 A1 | 19-04-2007 |
| | | | KR | 20080064122 A | 08-07-2008 |
| | | | RU | 2366089 C1 | 27-08-2009 |
| | | | US | 2007081449 A1 | 12-04-2007 |
| WO 2008033802 | A | 20-03-2008 | CA | 2660887 A1 | 20-03-2008 |
| | | | EP | 2080399 A2 | 22-07-2009 |
| | | | KR | 20090054468 A | 29-05-2009 |
| | | | US | 2008096569 A1 | 24-04-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Mobile WiMax-Part I: A Technical Overview and Performance Evaluation,* August 2006